Europäisches Patentamt

European Patent Office

Office européen des brevets

(11) Publication number: **0 438 777 A2**

# EUROPEAN PATENT APPLICATION

(21) Application number: 90125455.7

(22) Date of filing: 24.12.90

(51) Int. Cl.⁵: **C08L 81/02**, C08K 5/09,
C08K 5/15, C08L 81/06,
//(C08L81/02,23:00),(C08L81/06,
23:00)

(30) Priority: 29.12.89 US 459373
06.07.90 US 549023

(43) Date of publication of application:
31.07.91 Bulletin 91/31

(84) Designated Contracting States:
AT BE CH DE ES FR GB IT LI NL

(71) Applicant: PHILLIPS PETROLEUM COMPANY
5th and Keeler
Bartlesville Oklahoma 74004(US)

(72) Inventor: Wang, I. Wayne
5121 Glenbrook Drive
Vienna, WV 26105(US)
Inventor: Yu, Michael Chen-Chen
208 NE Spruce Avenue
Bartlesville, OK 74006(US)
Inventor: Blackwell, Jennings Price, Jr.

deceased(US)
Inventor: Hsieh, Henry Lien
1406 Meadow Lane
Bartlesville, OK 74006(US)
Inventor: Beever, William Herbert
Rural Route No. 2, P.O. Box 2670
Bartlesville OK 74006(US)

(74) Representative: Geissler, Bernhard, Dr. jur.,
Dipl.-Phys. Patent- und Rechtsanwälte et al
Bardehle-Pagenberg-Dost-
Altenburg-Frohwitter-Geissler & Partner
Postfach 86 06 20
W-8000 München 86(DE)

(54) Poly(arylene sulfide) compositions having improved impact strengths and methods.

(57) Poly(arylene sulfide) compositions having improved impact strengths upon being molded, methods of producing the compositions and molded products formed of the compositions are provided. The compositions are comprised of poly(arylene sulfide) resin, a polyolefin elastomer and a carboxylic anhydride.

EP 0 438 777 A2

## POLY(ARYLENE SULFIDE) COMPOSITIONS HAVING IMPROVED IMPACT STRENGTHS AND METHODS

### Background of the Invention

#### Field of the Invention

This application is a continuation-in-part of application Serial No. 07/459,373 filed December 29, 1989. The present invention relates to poly(arylene sulfide) compositions having improved impact strengths, methods of preparing the compositions and molded products formed from the compositions.

#### Description of the Prior Art

Poly(arylene sulfide) resin compositions have achieved wide acceptance as thermoplastic materials having excellent chemical, heat and electrical insulation resistance as well as superior rigidity compared to other thermoplastic materials. In some applications, however, impact resistances higher than those heretofore achievable by poly(arylene sulfide) compositions are required. For example, high impact resistances combined with other good mechanical properties are required for certain automotive applications, e.g., intake manifolds and other under-the-hood mechanical components.

A number of additives for improving the mechanical properties of poly(arylene sulfide) resin compositions have been proposed which have achieved varying degrees of success. For example, reinforcement materials such as glass fibers and coupling agents have been incorporated in the resin compositions to improve impact strengths and other properties. However, there is a need for poly(arylene sulfide) compositions having additionally improved impact strengths for the automotive applications mentioned above as well as other similar applications.

### Summary of the Invention

The present invention meets the need described above by providing poly(arylene sulfide) compositions which have improved impact strengths when molded, methods of producing such compositions and molded products formed of the compositions.

The compositions are each basically comprised of a poly(arylene sulfide) resin, a polyolefin elastomer and a carboxylic anhydride. Preferred poly(arylene sulfide) resins are poly(phenylene sulfide) resins and poly(phenylene sulfide/sulfone) resins. Preferred polyolefin elastomers are ethylene-propylene rubber and ethylene-propylene terpolymer, and preferred carboxylic anhydrides are maleic anhydride, nadic anhydride and derivatives thereof.

The compositions are prepared by combining a poly(arylene sulfide) resin, a polyolefin elastomer and a carboxylic anhydride to form a mixture thereof. The mixture is then melt blended such as by passing the mixture through an extruder at a temperature above the melting point of the poly(arylene sulfide) resin. Molded products formed of the compositions have improved impact strengths.

In a preferred embodiment the poly(arylene sulfide) resin comprises a poly(phenylene sulfide) resin which includes polyvalent metal cations.

It is, therefore, a general object of the present invention to provide poly(arylene sulfide) compositions having improved impact strengths and methods of producing such compositions.

A further object of the present invention is the provision of molded products formed of poly(arylene sulfide) compositions having improved impact strengths.

Other and further objects, features and advantages of the present invention will be readily apparent to those skilled in the art upon a reading of the description of preferred embodiments which follows.

### Description of Preferred Embodiments

The poly(arylene sulfide) compositions having improved impact strengths of this invention are each comprised of at least one poly(arylene sulfide) resin, at least one polyolefin elastomer and at least one carboxylic anhydride. The compositions can optionally contain reinforcement materials as well as other additives such as plasticizers, pigments, mold release agents, anti-oxidants, etc.

The term "poly(arylene sulfide) resin" is used herein to broadly designate arylene sulfide polymers whether homopolymers, copolymers, terpolymers, and the like, or a blend of such polymers. Poly(arylene sulfide) resins which are suitable for use in accordance with the present invention are those described in

2

EP 0 438 777 A2

United States Patents Nos. 3,354,129 issued November 21, 1967; 4,415,729 issued November 15, 1983; 4,588,789 issued May 13, 1986; 3,919,177 issued November 11, 1975; 4,038,261 issued July 26, 1977; and 4,656,231 issued April 7, 1987, which patents are incorporated herein by reference. Of the various poly-(arylene sulfide) resins which can be utilized, poly(phenylene sulfide) resins and poly(phenylene sulfide/sulfone) resins are most preferred. The preferred commercially available poly(phenylene sulfide) resins are those manufactured by Phillips Petroleum Company of Bartlesville, Oklahoma, and marketed as RYTON® poly(phenylene sulfide) resins having flow rates in the range of from about 0.1 to about 500 grams per 10 minutes as determined by ASTM D1238, procedure B, condition 315/5.0.

Poly(phenylene sulfide/sulfone) resins are specifically described in United States Patent No. 4,016,145 issued April 5, 1977 and United States Patent No. 4,127,713 issued November 28, 1978, which patents are incorporated herein by reference. The preferred commercially available poly(phenylene sulfide/sulfone) resins are those manufactured by Phillips Petroleum Company and marketed as RYTON® S poly-(phenylene sulfide/sulfone) resins having flow rates in the range of from about 0.1 to about 500 grams per 10 minutes as determined by ASTM D1238, procedure B, condition 343/5.0.

Particularly beneficial effects have been noted when the poly(phenylene sulfide) resin is one which contains alkali metal or polyvalent metal cations as a result of having been washed with a solution of alkali metal or polyvalent metal ions.

As a general rule, the poly(arylene sulfide) resin is one which results from a polymerization phase and a recovery phase, and optionally a washing phase which follows the recovery phase. In the polymerization phase polyhalo-substituted aromatic compounds are reacted with sulfur-containing reactants in a polar organic solvent to produce the resin. By way of a representative example, the polymer can be prepared by reacting an approximately 50% by weight sodium hydroxide aqueous solution with an approximately 60% by weight NaSH aqueous solution to produce an aqueous sodium sulfide solution. A quantity of N-methyl-2-pyrrolidone (NMP) is added to the aqueous sodium sulfide solution and the resulting solution is dehydrated in a known manner to produce the following solution:

$$(Na_2S \cdot NMP \cdot H_2O) + 2NMP$$

To this solution, a suitable modifier or phase transfer agent can be added. In a particularly preferred embodiment about 0.3 moles of sodium acetate per mole of $Na_2S$ is added to produce a reaction mixture to which a suitable amount of dichlorobenzene (preferably para-dichlorobenzene) is added. The resulting reaction mixture is polymerized preferably by two sequential heating cycles to produce a reaction mixture containing poly(para-phenylene sulfide) resin.

It is currently believed that the use of the two sequential heating cycles produces an apparent increase in the linear molecular weight of the PPS produced from the aforementioned polymerization.

In a preferred embodiment the first of the two heating cycles is at a first temperature, and the second cycle is at a higher temperature. The second, higher temperature cycle is performed immediately after completion of the lower temperature cycle. During the lower temperature cycle, the reaction mixture is heated to a temperature within the range of from about 400°F to about 460°F for a time period within the range of about 1 hour to about 6 hours. More preferably, this heating is at a temperature within the range of from about 400°F to about 440°F for a time period within the range of from about 3 hours to about 4 hours, and even more preferably the heating occurs at about 440°F for about 4 hours. In a preferred embodiment the higher temperature cycle is performed so that the reaction mixture is heated to a temperature within the range of from about 500°F to about 520°F for a time period within the range of from about 1 hour to about 4 hours. More preferably, the heating during the higher temperature cycle is performed at a temperature of about 510°F for about 3 hours. After the performance of these two heating cycles, the reaction mixture contains liquid high molecular weight, linear PPS dispersed in NMP.

After the polymerization it is desirable to recover the high molecular weight linear poly(arylene sulfide) resin in a solidified form for ease in removing any by-products. Also, it is the solidified form of the PAS which is typically used in producing articles of manufacture, such as in this case the blends of the present invention. The recovery of the PAS from the polymerization mixture can be performed by any suitable technique which does not degrade the polymer. Currently three techniques are preferred.

One preferred method, includes flash recovering high molecular weight linear PAS. The preferred flash recovery is referred to as non-vent flash recovery. It is commenced after the polymerization without venting the pressure of the reaction vessel where the polymerization was performed. The temperature is increased above the polymerization temperature to start the non-vent flash recovery, and then the reaction mixture is flashed to a vessel at a lower temperature and pressure (such as a ribbon blender at 460°F and 0.02 psig

3

which is purged with nitrogen). As a result of this non-vent flash recovery the polymer is recovered in a solidified form.

Another recovery technique is referred to herein as NMP quench recovery. This technique broadly includes: (a) sequentially solidifying high molecular weight then low molecular weight linear PAS from the reaction mixture including high molecular weight and low molecular weight PAS by controlled cooling; (b) redissolving low molecular weight linear PAS; and (c) filtering solidified high molecular weight linear PAS from the reaction mixture. In the NMP quench recovery for the previously described particular polymerization example wherein liquid molecular weight, linear PPS was produced, the reaction mixture from the polymerization after being polymerized at a temperature of about 510° F can be cooled at about 3° F per minute to about 470° F and then cooled at about 1° F per minute to about 400° F. At approximately 425° F, the high molecular weight, linear PPS solidifies into a granular form. Further cooling is continued to reduce pressure within the vessel in which the foregoing processing is done. At about 250° F, low molecular weight species of PPS, referred to often as oligomers, solidify and the remaining liquid tends to become very viscous. To lower the viscosity for facilitating filtering, an appropriate polar organic compound such as NMP is added in large quantities, such as about 3 to about 5 moles per mole of sulfur present. The use of the large amounts of NMP has been found to redissolve solidified oligomers so that the solid PPS that is recovered will contain substantially less of the lower molecular weight oligomers. The separation of the solid from the liquid can be carried out using any suitable known procedure such as screening, centrifuging, or filtration.

The third recovery technique is analogous to the NMP quench technique except that water rather than NMP is used for diluting the reaction mixture.

The PAS particles even after separation from the reaction mixture tend to retain some of the filtrate. If this is to be removed the solid then needs to be processed through a washing step. The washing step can be carried out in any suitable manner. It has been discovered, however, that certain types of washing steps improve characteristics to the recovered PAS resin. Some examples of processes in which washing improves the characteristics of PAS resins are disclosed in U.S. Patents 4,588,789; 4,801,664; and 4,877,850, the disclosures of which are incorporated herein by reference. One technique of washing involves the employment of an aqueous acidic treating solution such as disclosed in U.S. 4,801,664. Another technique involves merely water washing. Still another technique involves washing with aqueous solutions of the metal salts, oxides, or hydroxides of groups I and IIA of the Periodic Table, such as disclosed in U.S. 4,588,789. It is also within the scope of the present invention to carry out the washing by the use of several of these techniques in sequence, for example, a water wash followed by an aqueous acidic wash followed by a wash with an aqueous alkali metal ion containing solution, and finally with an aqueous solution of a polyvalent metal cation selected from the group consisting of calcium, magnesium, and zinc. In fact, it has been discovered that the greatest improvements in impact strength which have been observed by the use of the maleated olefin and elastomer in the present invention has been obtained using poly(arylene sulfide) resins in which the final wash employed an aqueous solution containing a polyvalent cation selected from the group consisting of calcium, magnesium, and zinc.

A preferred composition of the present invention is comprised of a poly(arylene sulfide) resin, preferably poly(phenylene sulfide) resin or poly(phenylene sulfide/sulfone) resin, present in the composition in an amount in the range of from about 20% to about 99% by weight, a polyolefin elastomer, preferably ethylene-propylene rubber or ethylene-propylene terpolymer, present in an amount in the range of from about 1.0% to about 50% by weight and a carboxylic anhydride, preferably maleic anhydride or nadic anhydride or derivatives of such anhydrides, present in an amount in the range of from about 0.01% to about 5% by weight. The term "% by weight" is used herein to mean the weight percent of one component in a composition or mixture based on the total weight of all of the components in the composition or mixture.

A variety of polyolefin elastomers in addition to ethylene-propylene rubber and ethylene-propylene terpolymer (referred to by the abbreviations EPR and EPDM) can be utilized in accordance with the present invention. Generally such elastomers are homopolymers or copolymers derived from alpha-olefins such as ethylene, propylene, butene, isobutene, pentene, methylpentene, hexene, etc. Ethylene-propylene rubber and ethylene-propylene terpolymer are preferred for use in acordance with this invention with ethylene-propylene terpolymer being the most preferred.

The term ethylene-propylene terpolymer (EPDM) refers to copolymer of ethylene, propylene and at least one non-conjugated diene. The preferred non-conjugated dienes used in making the EPDM are linear aliphatic dienes of at least six carbon atoms which have one terminal bond and one internal double bond and cyclic dienes wherein one or both of the carbon-to-carbon double bonds are part of a carboxylic ring. Elastomeric, i.e. rubbery terpolymer of ethylene, propylene, and 1,4-hexadiene are particularly preferred.

EP 0 438 777 A2

Details for the preparation of such EPDM elastomers is disclosed in U.S. Patent Nos. 2,933,480; 2,962,451; 3,000,866; 3,093,620; and 3,260,708, the disclosures of which are incorporated herein by reference.

Carboxylic anhydrides which can be used are those having both a double bond and an anhydride group. Such compounds include maleic anhydride and nadic anhydride. Derivatives of the foregoing compounds such as methyl nadic anhydride are also suitable.

The compositions of the present invention can optionally include reinforcement material, e.g., glass, carbon or aramid fibers or the like. Glass reinforcement material is preferred with glass fibers being the most preferred. The reinforcement material can be included in the above described compositions in amounts up to about 70% by weight i.e., from 0% to about 70% by weight, more generally 0% to about 60% by weight.

A particularly preferred composition of the present invention is comprised of a poly(arylene sulfide) resin selected from the group consisting of poly(phenylene sulfide) resin and poly(phenylene sulfide/sulfone) resin present in the composition in an amount in the range of from about 40% to about 95% by weight, a polyolefin elastomer selected from the group consisting of ethylene-propylene rubber and ethylene-propylene terpolymer present in an amount in the range of from about 3% to about 40% by weight and a carboxylic anhydride selected from the group consisting of maleic anhydride, nadic anhydride and derivatives thereof present in an amount in the range of from about 0.05% to about 2.0% by weight. If reinforcement material is utilized in the composition, it is preferably glass fibers present in the composition in an amount up to about 50% by weight.

The most preferred poly(arylene sulfide) composition of the present invention having improved impact strength when molded is comprised of poly(phenylene sulfide) resin present in the composition in an amount in the range of from about 60% to about 90% by weight, ethylene-propylene terpolymer present in an amount in the range of from about 5% to about 20% by weight and maleic anhydride present in an amount in the range of from about 0.1% to about 1% by weight. When reinforcement material is utilized in the composition, it is preferably glass fibers present in an amount up to about 40% by weight.

As mentioned above, the compositions can include other additives including, but not limited to, pigments such as carbon black, mold corrosion inhibitors such as hydrotalcite and processing aids such as high density polyethylene.

A composition of this invention having improved impact strength when molded is prepared by combining the poly(arylene sulfide) resin with the polyolefin elastomer and carboxylic anhydride to form a mixture thereof. The poly(arylene sulfide) resin is preferably dried prior to use in a forced air oven at a temperature in the range of from about 100°C to about 140°C for a time period of about 8 hours.

Many suitable methods of combining the components are well known to those skilled in the art. For example, the components can be mixed together at room temperature in a rotating drum blender, or in an intensive mixer such as a Henschel mixer, to form a homogeneous mixture of the components. The homogeneous mixture is then melt blended by heating the mixture to a temperature above the melting point of the poly(arylene sulfide) resin and subjecting the mixture to further blending. A particularly suitable technique for melt blending the mixture is to pass the mixture through an extruder at a temperature in the range of from about 300°C to about 330°C. The extrudate can be pelletized or formed into strands, sheets or tapes whereby it can best be used for forming molded products therefrom, e.g., by injection molding, press molding, etc.

The following examples are presented to further illustrate the compositions and methods of the invention. The particular species and conditions employed in the examples are intended to be illustrative of the invention and not limiting thereto.

Example 1

Various compositions of the present invention were prepared using Phillips Petroleum Company RYTON® poly(phenylene sulfide) resins having flow rates of 28 grams per 10 minutes, 52 grams per 10 minutes and 94 grams per 10 minutes, respectively. The other components utilized in the compositions were ethylene-propylene terpolymer elastomer (Nordel 5892 obtained from R.T. Vanderbilt Company, Inc. of Norwalk, Connecticut), and maleic anhydride.

The poly(phenylene sulfide) resins were dried in a forced air oven at about 120°C for about 4 hours before mixing. The dry components were tumble blended in plastic bags followed by melt blending in a 30mm corotating Werner-Pfleiderer twin screw extruder with an open vent and pelletizer at from about 310°C to about 320°C. The pellets produced were molded in an Arburg 305 ECO or ENGEL injection molding machine using a barrel temperature of about 316°C and a mold temperature of 38°C. Test specimens formed of the compositions were tested for Izod impact strength as determined by ASTM D-256

5

for both notched and unnotched specimens. Melt flow was measured by ASTM D1238, condition 315/5.0. The results of these tests are shown in Table I below.

### TABLE I

#### COMPOSITION

| COMPONENT, % by weight | A | B | C | D | E | F |
|---|---|---|---|---|---|---|
| Poly(phenylene sulfide) resin with Flow Rate of 28 grams/10 minutes | 100 | 79.6 | - | - | - | - |
| Poly(phenylene sulfide) resin with Flow Rate of 52 grams/10 minutes | - | - | 100 | 79.6 | - | - |
| Poly(phenylene sulfide) resin with Flow Rate of 94 grams/10 minutes | - | - | - | - | 100 | 79.6 |
| Ethylene-propylene terpolymer (Nordel 5892[1]) | - | 20.0 | - | 20.0 | - | 20.0 |
| Maleic anhydride | - | 0.4 | - | 0.4 | - | 0.4 |

#### MECHANICAL PROPERTIES

| Izod Impact Strength (ft. lbs./in.) | A | B | C | D | E | F |
|---|---|---|---|---|---|---|
| Notched   - unannealed[2] | 0.63 | 13.7[3] | 0.47 | 11.3[3] | 0.38 | 2.8[4] |
|          - annealed[2] | 0.37 | 1.73 | 0.30 | 1.50 | 0.22 | 0.91 |
| Unnotched - unannealed[2] | 35 | No Break | 24 | No Break | 45 | No Break |
|            - annealed[2] | 16 | No Break | 11 | No Break | 9 | 22 |

1 Nordel 5892 is comprised of ethylene-propylene terpolymer with high ethylene content.

2 annealed at 204°C for 2 hours

3 non-break

4 partial break

From Table I it can be seen that the compositions of this invention containing ethylene-propylene terpolymer elastomer and maleic anhydride exhibited significantly improved impact strengths as compared to the pure resins.

Example 2

6

Compositions containing varying quantities of a commercially available mixture (Nordel 5501 - R.T. Vanderbilt Company, Inc.) containing 85% by weight of an ethylene-propylene terpolymer (Nordel 1145) and 15% by weight high density polyethylene with and without varying quantities of maleic anhydride were prepared. The poly(arylene sulfide) resin utilized was Phillips Petroleum Company RYTON® poly(phenylene sulfide) resin having a flow rate of 41. This particular poly(phenylene sulfide) resin was prepared by a process which involved polymerization and an NMP quench followed by a calcium acetate wash.

Test samples of the compositions were prepared in accordance with the procedure described in Example 1. The test samples were additionally annealed at 204°C for 2 hours prior to testing for mechanical properties. Such mechanical properties included Izod impact strength as determined by ASTM D-256 for notched specimens, tensile strength in accordance with ASTM D-638 and heat distortion temperature as determined by ASTM D648. The results of these tests are given in Table II below.

## TABLE II

### COMPOSITION

| COMPONENT, % by weight | A | B | C | D | E | F | G | H | I | J |
|---|---|---|---|---|---|---|---|---|---|---|
| Poly(phenylene sulfide) resin with Flow Rate of 41 grams/ 10 minutes | 100 | 98.3 | 95 | 94.91 | 90 | 89.83 | 85 | 84.74 | 80 | 79.66 |
| Ethylene-propylene terpolymer (Nordel 5501[1]) | - | - | 5 | 5 | 10 | 10 | 15 | 15 | 20 | 20 |
| Maleic Anhydride | - | 0.17 | - | 0.09 | - | 0.17 | - | 0.26 | - | 0.34 |

### MECHANICAL PROPERTIES

| | A | B | C | D | E | F | G | H | I | J |
|---|---|---|---|---|---|---|---|---|---|---|
| Izod Impact Strength (ft. lbs./in.) Notched-[2] annealed[2] | 0.3 | 0.1 | 0.5 | 0.5 | 0.9 | 1.1 | 1.3 | 4.6 | 1.4 | 7.4 |
| Tensile Strength (ksi) | 12.4 | 12.2 | 10.2 | 10.0 | 9.3 | 8.7 | 7.8 | 7.4 | 7.9 | 7.4 |
| Heat Distortion Temperature (°C) | 116 | 120 | 111 | 112 | 110 | 108 | 110 | 106 | 110 | 107 |

[1] Nordel 5501 is comprised of 85% by wieght ethylene-propylene terpolymer (Nordel 1145) and 15% by weight high density polyethylene.

[2] Annealed at 204°C for 2 hours.

From Table II it can be seen that the amounts of ethylene-propylene terpolymer elastomer and maleic anhydride utilized can be varied to balance the improvement in impact strength with the corresponding reduction in tensile strength and heat distortion temperature.

Example 3

Compositions of the invention containing ethylene-propylene terpolymer and mixtures of ethylene-propylene terpolymer with different amounts of high density polyethylene were prepared and tested in accordance with the procedure of Example 1. Some of the test specimens were annealed at 204°C for 2 hours prior to testing. The only mechanical property determined was notched Izod impact strength. The results of these tests are given in Table III below. In this case the poly(phenylene sulfide) resin was also one which was prepared by polymerization and NMP quench followed by a wash with aqueous calcium acetate.

## TABLE III

| COMPONENT, % by weight | A | B | C |
|---|---|---|---|
| COMPOSITION | | | |
| Poly(phenylene sulfide) resin with Flow Rate of 55 grams/10 minutes | 79.6 | 79.6 | 79.6 |
| Ethylene-propylene terpolymer Nordel 1145[1] Nordel 5501[2] Nordel 4167[3] | 20 | 20 | 20 |
| Maleic anhydride | 0.4 | 0.4 | 0.4 |
| MECHANICAL PROPERTIES | | | |
| Izod Impact Strength (ft. lbs./in.) | | | |
| Notched – unannealed[4] | 13.5[5] | 13.9[5] | 13.6[5] |
| Notched – annealed | 7.6[6] | 7.8[6] | 7.4[6] |

1 100% ethylene-propylene terpolymer in bale form (diene monomeric unit is 1,4 hexadiene).

2 85% by weight ethylene-propylene terpolymer and 15% by weight high density polyethylene.

3 67% by weight ethylene-propylene terpolymer and 33% by weight high density polyethylene.

4 annealed at 204°C for 2 hours

5 non-break

6 partial break

From Table III it can be seen that the use of different commercially available ethylene-propylene terpolymer mixtures does not materially affect the resulting impact strengths.

Example 4

Compositions of the invention were prepared using various amounts of maleic anhydride in accordance with the procedure described in Example 1. The poly(phenylene sulfide) resin employed in this example was also one which had been prepared by polymerization and NMP quench followed by an aqueous calcium acetate wash. Izod impact strengths for notched specimens were determined using unannealed specimens, specimens annealed at 150°C for 2 hours and specimens annealed at 204°F for 2 hours. The results of these tests are given in Table IV below.

## TABLE IV

### COMPOSITION

| COMPONENT, % by weight | A | B | C | D | E |
|---|---|---|---|---|---|
| Poly(phenylene sulfide) resin with Flow Rate of 55 | 100.6 | 80 | 79.8 | 79.6 | 79.2 |
| Ethylene-propylene terpolymer (Nordel 4167[1]) | – | 20 | 20 | 20 | 20 |
| Maleic anhydride | – | – | 0.2 | 0.4 | 0.8 |

### MECHANICAL PROPERTIES

| Izod Impact Strength (ft. lbs./in.) | A | B | C | D | E |
|---|---|---|---|---|---|
| Notched – unannealed | 0.5 | 12.0[4] | 13.3[4] | 13.6[4] | 13.1[4] |
| Notched – annealed[2] | 0.3 | 1.2 | 10.4[4] | 10.7[4] | 9.3[4] |
| Notched – annealed[3] | 0.3 | 1.2 | 6.1[5] | 7.4[5] | 3.3 |

1 Nordel 4167 is comprised of 67% by weight ethylene-propylene terpolymer and 33% by weight high density polyethylene.

2 annealed at 150°C for 2 hours

3 annealed at 204°C for 2 hours

4 non-break

5 partial break

From Table IV it can be seen that changes in the quantity of maleic anhydride bring about significant changes in the impact strengths of annealed specimens.

Example V

A series of runs were made to evaluate the effects of various wash steps on the relationship between the poly(phenylene sulfide) resin and the maleated olefin elastomer. These runs employed a PPS recovered using NMP quench. Compared to water quench or flash recovered PPS resins, the NMP quench recovery generally produces resins containing lower amounts of low molecular weight oligomers sometimes called slime. The starting PPS for this set of experiments was a blend of five NMP quenched acid washed polymers obtained from a commercial plant. The blend had a flow rate of 88. The blend was washed with acidic acid at 177° C to insure that the polymer had as little metal ions associated with it as possible. The resulting acid washed PPS was then in other runs subjected to other washing steps and the various resulting PPS resins were used to form blends with an EPDM sold under the tradename Nordel 5501. All the blends were prepared to contain 79.6 weight percent PPS, 20 weight percent Nordel 5501, and 0.4 weight percent maleic anhydride. The variables and results are summarized in Table V.

TABLE V

MALEATED EPDM MODIFIED PPS BLENDS BASED ON VARIOUS WASHED PPS

| Blend Sample No. | Wash on PPS | Ionic Content (ppm) (c) | | | | Annealed N. Izod (ft-lb/in) |
|---|---|---|---|---|---|---|
| | | PPS Na | Ca | Mg | Zn | |
| 12-1 | H+ (b) | 43 | 8 | 1 | 39 | 1.6 |
| 12-2 | H+/ KOH (c) | 35 | 10 | 1 | 52 | 2.1 |
| 12-3 | H+/ NaOH (d) | 244 | 10 | 1 | 48 | 2.7 |
| 12-4 | H+/ NaOH / Ca(OAc)$_2$ (f) | 46 | 183 | 1 | 54 | 9.8 |
| 12-5 | H+/ NaOH / Mg(OAc)$_2$ (e) | 80 | 15 | 147 | 65 | 8.4 |
| 12-6 | H+/ NaOH / Zn(OAc)2 (g) | 48 | 12 | 2 | 634 | 7.7 |
| 12-7 | H+/ Ca(OH)$_2$ (h) | 46 | 275 | 6 | 26 | 2.7 |

(a) Ionic contents determined by ICP-MS method.

(b) Weight ratio of (acetic acid/PPS) = 0.23%; Weight ratio of PPS/water = 0.200.

(c) Weight ratio of (KOH/PPS) = 0.75%; Weight ratio of PPS/water = 0.080. Potassium content, determined by ICP-optical method, for this polymer is 460 ppm compared to a background noise of about 280 ppm.

(d) Weight ratio of (NaOH/PPS) = 0.208%; Weight ratio of PPS/water = 0.180.

(e) Weight ratio of (Ca(OAc)$_2$·0.5H$_2$O/PPS) = 1.325%; Weight ratio of PPS/water = 0.120.

(f) Weight ratio of (Mg(OAc)$_2$·4H$_2$O/PPS) = 2.55%; Weight ratio of PPS/water = 0.080.

(g) Weight ratio of (Zn(OAc)$_2$·2H$_2$O/PPS) = 2.6%; Weight ratio of PPS/water = 0.080.

(h) Weight ratio of (Ca(OH)$_2$/PPS) = 0.9%; Weight ratio of PPS/water = 0.080.

The impact strength of the blend prepared from purely acid washed PPS was much lower than that obtained from the blends which had subsequent cationic exchange washed. The Izod impact strength value of 1.6 for the blend resulting from the purely acid treated PPS although lower than that obtained for the other runs, was still higher than one would have obtained had one merely blended the acid washed PPS and the EPDM without the use of the maleic anhydride.

The data in Table V further shows that if the acid wash is followed by a potassium, sodium, or calcium hydroxide wash the resulting blends had marginally higher annealed impact strengths compared to that of the acid washed PPS of blend 1, i.e., 2.1, 2.7, and 2.7 vs. 1.6 ft-lb/in,. The data further shows that sodium hydroxide washings followed with a magnesium, calcium, or zinc acetate wash afforded PPS which resulted in blends with significantly higher impact strengths, i.e., 8.4, 9.8, and 7.7 ft-lb/in. Furthermore, the magnesium, calcium, and zinc contents for those three PPS resins were all markedly higher than that of the precursor resin which had been contacted only with the acid and the sodium hydroxide. It is therefore considered that for the most notable improvements in impact strength it is desirable to employ a poly-(phenylene sulfide) resin in which sodium'ions have been exchanged by polyvalent cations such as calcium, magnesium, or zinc.

The one-step hot calcium hydroxide wash on the acid washed PPS, i.e. Blend 12-7, afforded PPS resins with high calcium contents but the blend did not exhibit nearly as high an improvement in impact resistance as the blend prepared from a PPS which had been first washed with sodium hydroxide and then with an aqueous calcium cation-containing solution. The high calcium contents obtained by using only a calcium hydroxide wash as in blend 12-7 may be due in large part to excess calcium hydroxide which is hard to rinse out because of its low solubility in water. It is theorized therefore that for the best interaction of the PPS with the maleated EPDM it may be necessary for the calcium to be of the type that is in some way "bonded" to the resin rather than of the type which is just associated with the resin but is extractable therefrom.

Example 6

In this example a series of commercial PPS resins were employed which were formed by polymerization and NMP quench followed by a wash with calcium acetate at about 70°C. The PPS resulting from the polymerization is believed to carry sodium ion on its chain ends after the polymerization reaction. If the sodium ion is not removed by an acid wash it is considered that the sodium ion may then be exchanged with calcium cation in the calcium acetate wash step. In this experiment the blends were prepared using four such PPS resins of varying molecular weights. The cation analysis for the various PPS resins and the impact strength for the blends produced with those resins is summarized in Table VI.

## TABLE VI

### IMPACT MODIFIED PPS BASED ON CALCIUM ACETATE WASHED PPS[a]

| PPS lot No. | P88-224 | P88-105 | P88-103 | P88-0095 |
|---|---|---|---|---|
| Flow rate (g/ 10 min) | 41 | 55 | 73 | 131 |
| Na (ppm) | 108 | 100 | 96 | 100 |
| Ca (ppm) | 243 | 272 | 248 | 275 |

### Annealed Property for the Maleated Nordel 5501/PPS Blend[b]

| N. Izod (ft-lb/in) | 6.6 | 7.8 | 5.8[c] | 1.8 |
|---|---|---|---|---|

[a] The amount of calcium acetate used was 0.48 kg for 100 kg batch size of PPS (i.e. weight ratio of 0.48 wt.%)

[b] All blends contain 79.6 wt.% PPS, 20 wt.% Nordel 5501, and 0.4 wt.% maleic anhydride.

[c] Average of four runs.

Table VI shows that the calcium contents for the four calcium washed PPS resins are comparable. The impact strength for the first three blends with flow rates in the range of 41 to 73 are markedly higher than the blend based on the PPS with the higher flow rate. It is speculated that it would be reasonable to expect a sharp drop in the impact property for the blends when the matrix PPS resin has a certain "critical flow rate". However, it is still considered that the impact strength of such a blend would be better than the impact strength of a blend between that same PPS resin and EPDM where the maleic anhydride was not employed.

Example 7

PPSS compositions were prepared using various types of commercial ethylene-propylene rubber, namely Epsyn 7006, Epsyn 5206, and Vistalon 719. The Epsyn EPR's are stated to contain about 60 weight percent ethylene. The Vistalon EPR was stated as containing about 75 weight percent ethylene. A summary of the recipes and the results obtained are set forth in Table V.

14

## Table V

### EPR/MAH Modified PPSS

| PPSS[a] | 80 | 79.6 | 80 | 79.6 | 80 | 79.6 |
|---|---|---|---|---|---|---|
| EPSYN 7006 | 20 | 20 | - | - | - | - |
| EPSYN 5206 | - | - | 20 | 20 | - | - |
| Vistalon 719 | - | - | - | - | 20 | 20 |
| Maleic Anh. | - | 0.4 | - | 0.4 | - | 0.4 |
| N. Izod (ft-lb/in) | 2.95 (PB) | 3.5 (PB) | 2.5 (PB) | 3.5 (PB) | 1.7 | 1.95 |
| Un. Izod (ft-lb/in) | 16.1 | NB | 16 | NB | 14 | NB |
| Tens. Str. (Ksi) | 5 | 5.6 | 5.7 | 6.5 | 6.4 | 6.9 |
| Tens. Elg. (%) | 6.7 | 6.7 | 6.9 | 7.8 | 7.3 | 8.2 |

(a) Poly(phenylene sulfide/sulfone) resin with flow rate of 70 as determined by ASTM D1238, procedure B, condition 343/5.0.

Table V shows that the use of maleic anhydride significantly improved both the notched and unnotched impact strengths of the EPR/PPSS blends. Tensile strength were also better when the maleic anhydride was employed. The compositions containing EPR having higher ethylene content provided the highest notched Izod impact strengths.

Thus, the present invention is well adapted to carry out the objects and attain the ends and advantages mentioned as well as those inherent therein. While numerous changes in components, quantities and the like may be made by those skilled in the art, such changes are encompassed within the spirit of this invention as defined by the appended claims.

## Claims

1. A poly(arylene sulfide) composition having improved impact strength upon being molded comprised of a poly(arylene sulfide) resin, a polyolefin elastomer and a carboxylic anhydride, in particular wherein said poly(arylene sulfide) resin is selected from the group consisting of poly(phenylene sulfide) resin and poly(phenylene sulfide/sulfone) resin.

2. A poly(arylene sulfide) composition having improved impact strength upon being molded comprising poly(phenylene sulfide) resin including polyvalent metal cations and further comprising an impact strength improving amount of an impact strength improver resulting from the combination of a polyolefin elastomer and a carboxylic acid anhydride, in particular wherein said polyvalent metal cations are selected from the group consisting of the cations of magnesium, calcium and zinc.

3. A poly(arylene sulfide) composition comprising polymeric components and an unsaturated carboxylic anhydride, wherein said polymeric components consist essentially of a poly(arylene sulfide) resin and a polyolefin elastomer selected from ethylene-propylene copolymers and ethylene-propylene-diene terpolymers, said polyolefin elastomers optionally containing therein polyethylene, and wherein said unsaturated carboxylic anhydride is present in an amount such that said composition upon being melt blended and molded will have a higher impact strength then if said unsaturated carboxylic anhydride had not been present, in particular wherein said poly(arylene sulfide) resin is selected from poly(phenylene sulfide) resins consisting essentially of repeating units of the formula (-Ph-S-) or poly(phenylene sulfide/sulfone) consisting essentially of repeating units of the formula (-Ph-SO$_2$-Ph-S-),

wherein Ph is a phenylene radical.

4. The composition of claims 1, 2 or 3, wherein said poly(arylene sulfide) resin is present in said composition in an amount in the range of from about 20 % to about 99 % by weight, said polyolefin elastomer is present in an amount in the range of from about 1.0 % to about 50 % by weight and said carboxylic anhydride is present in an amount in the range of from about 0.01 % to about 5.0 % by weight, said weight percents being based on the weight of the composition.

5. The composition of claims 1 or 2, wherein said polyolefin elastomer is selected from the group consisting of ethylene-propylene rubber and ethylene-propylene terpolymer.

6. The composition of claims 1 or 2, wherein said carboxylic anhydride is selected from the group consisting of maleic anhydride and nadic anhydride i.e. endo-cis-Bicyclo (2.2.1)-5-heptene-2,3-dicarboxylic anhydride.

7. The composition of one of the proceeding claims wherein said poly(arylene sulfide) resin is present in said composition in an amount in the range of from about 40% to about 95% by weight, said polyolefin elastomer is present in an amout in the range of from about 3.0% to about 40% by weight and maleic anhydride is present in an amount in the range of from about 0.05% to about 2.0% by weight, said weight percents being based on the weight of said composition.

8. The composition of claim 7, which is further characterized to include glass reinforcement material present in said composition in an amount up to about 50% by weight.

9. The composition of one of the proceeding claims, wherein poly(phenylene sulfide) resin is present in said composition in an amount in the range of from about 60% to about 90% by weight, ethylene-propylene terpolymer is present in an amount in the range of from about 5% to about 20% by weight and maleic anhydride is present in an amount in the range of from about 0.1% to about 1% by weight, said weight percents being based on the weight of said composition.

10. The composition of claim 9, which is further characterized to include glass fiber reinforcement material present in said composition in an amount up to about 40% by weight.

11. The composition according to claim 3, wherein said unsaturated carboxylic anhydride is selected from maleic anhydride, endo-cis-Bicyclo(2.2.1)-5-heptene-2,3-dicarboxylic anhydride, methyl maleic anhydride, or methyl-substituted endo-cis-Bicyclo(2.2.1)-5-heptene-2,3-dicarboxylic anhydride.

12. The composition according to claim 11, containing about 5 to about 70 weight percent of said polyolefin elastomer based on the weight of said composition, in particular containing about 0.1 to about 1 weight percent of said unsaturated carboxylic anhydride.

13. The composition according to claim 12, wherein said unsaturated carboxylic anhydride comprises a cyclic ring wherein the anhydride functionality is a portion of the ring and the anhydride has ethylene unsaturation within the ring.

14. The composition according to claim 13, wherein said unsaturated carboxylic anhydride is maleic anhydride, in particular wherein said polyolefin elastomer is ethylene-propylene terpolymer containing polyethylene.

15. A composition according to claim 13, wherein said poly(arylene sulfide) resin includes polyvalent metal cations selected from the group consisting of magnesium, calcium and zinc.

16. A composition according to claim 13, wherein said poly(arylene sulfide) resin is one which has been prepared by steps including washing with protonic acid followed by washing with polyvalent metal cations selected from the group consisting of magnesium, calcium and zinc.

17. A composition according to claim 13, wherein said poly(arylene sulfide) resin is prepared by recovering a sodium-containing poly(phenylene sulfide) resin from the reaction mixture and then washing said sodium-containing poly(phenylene sulfide) resin with calcium acetate.

18. A composition according to claim 13, wherein said poly(arylene sulfide) resin is a polymer consisting essentially of repeating units of the formula (-Ph-SO$_2$-Ph-S-) wherein Ph is a phenylene radical and the polyolefin elastomer is ethylene-propylene copolymer containing polyethylene.

19. A composition according to claim 2, wherein said poly(phenylene sulfide) resin is prepared by washing the resin with a protonic acid and subsequently with a solution containing said polyvalent metal cations.

20. A composition according to claim 19, wherein said poly(phenylene sulfide) resin is washed first with a protonic acid, then with an alkali metal ion-containing solution and then with a solution of said polyvalent metal cation.

21. A composition according to claim 20, wherein said alkali metal ion comprises sodium, in particular wherein said polyvalent metal cation comprises calcium.

22. A composition according to claim 21, wherein said protonic acid consists essentially of acetic acid.

23. A composition according to claim 2, wherein said poly(phenylene sulfide) resin is prepared by recovering a sodium-containing poly(phenylene sulfide) resin from the reaction mixture and then washing said sodium-containing poly(phenylene sulfide) resin with calcium acetate.

24. A method of producing a poly(arylene sulfide) molding composition which has improved impact strength comprising:

combining a poly(arylene sulfide) resin with a polyolefin elastomer and a carboxylic anhydride; and

melt blending said mixture.

25. The method of claim 24, wherein said melt blending step is carried out by passing said mixture through an extruder at a temperature above the melting point of said poly(arylene sulfide) resin.

26. The method of claims 24 or 25, wherein said mixture is formed from the composition of one of the claims 1 to 23.

27. A molded product formed of the composition of one of the claims 1 to 23.